# EUROPÄISCHE PATENTANMELDUNG

(11) **EP 4 190 508 A1**
(43) Veröffentlichungstag der Anmeldung: **07.06.2023**
(21) Anmeldenummer: 21211599.2
(22) Anmeldetag: 01.12.2021
(51) Int. Cl.: B25F 5/00, G07C 3/00

(54) **SYSTEM UND VERFAHREN ZUR VERKNÜPFUNG VON DATEN MIT EINEM ZEITSTEMPEL UND DEREN SPEICHERUNG**

(71) Anmelder: Hilti Aktiengesellschaft, 9494 Schaan (LI)
(72) Erfinder: Mayer, Stefan, 86857 Hurlach (DE); Hauser, Klaus, 86830 Schwabmünchen (DE); Beckert, Benedikt, 86830 Schwabmünchen (DE); Han, Lixue, 86916 Kaufering (DE)
(74) Vertreter: Hilti Aktiengesellschaft Corporate Intellectual Property

(57) **Zusammenfassung**

Die vorliegende Erfindung betrifft ein System, das eine Werkzeugmaschine und eine Energieversorgungseinrichtung umfasst, wobei die Werkzeugmaschine eine Geräte-Elektronik und ein Geräte-Kommunikationsmodul aufweist und die Energieversorgungsvorrichtung ein Kommunikationsmodul. Die Energieversorgungsvorrichtung weist eine Uhr auf, mit der Zeitstempel erzeugt und mit Daten verknüpft werden können. Die Daten können beispielsweise durch einen Datenaustausch von der Werkzeugmaschine erhalten werden. Die Energieversorgungsvorrichtung weist darüber hinaus einen Datenspeicher zur Speicherung der mit dem Zeitstempel versehenen Daten auf. In einem zweiten Aspekt betrifft die Erfindung ein Verfahren zur Verknüpfung von Daten mit einem Zeitstempel und deren Speicherung.

## Beschreibung

Die vorliegende Erfindung betrifft ein System, das eine Werkzeugmaschine und eine Energieversorgungseinrichtung umfasst, wobei die Werkzeugmaschine eine Geräte-Elektronik und ein Geräte-Kommunikationsmodul aufweist und die Energieversorgungsvorrichtung ein Kommunikationsmodul. Die Energieversorgungsvorrichtung weist eine Uhr auf, mit der Zeitstempel erzeugt und mit Daten verknüpft werden können. Die Daten können beispielsweise durch einen Datenaustausch von der Werkzeugmaschine erhalten werden. Die Energieversorgungsvorrichtung weist darüber hinaus einen Datenspeicher zur Speicherung der mit dem Zeitstempel versehenen Daten auf. In einem zweiten Aspekt betrifft die Erfindung ein Verfahren zur Verknüpfung von Daten mit einem Zeitstempel und deren Speicherung.

### Hintergrund der Erfindung:

Im Stand der Technik sind Werkzeugmaschinen bekannt, die als Energieversorgungsvorrichtung eine Batterie und/oder einen Akkumulator ("Akku") aufweisen können. Einige solcher Werkzeugmaschinen sind derart ausgebildet, dass eine Zeitdauer erfasst werden kann, in der die Werkzeugmaschine in Betrieb ist. Bei diesen so erfassten Zeiten handelt es sich um relative Zeiten oder um Zeitspannen. Die Zeiten können beispielsweise zur Dokumentation von Arbeiten genutzt werden, die mit der Werkzeugmaschine durchgeführt werden.

Die Aufgabe, die der vorliegenden Erfindung zugrunde liegt, besteht darin, ein System aus Werkzeugmaschine und Energieversorgungsvorrichtung bereitzustellen, mit dem die Dokumentation von Arbeiten, die mit der Werkzeugmaschine durchgeführt werden, verbessert werden kann. Die Fachwelt würde es darüber hinaus begrüßen, wenn neben der Dokumentation zusätzliche Funktionalitäten in einem solchen System aus Werkzeugmaschine und Energieversorgungsvorrichtung bereitgestellt werden könnten.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System umfassend eine Werkzeugmaschine und eine Energieversorgungseinrichtung vorgesehen, wobei die Werkzeugmaschine eine Geräte-Elektronik und ein Geräte-Kommunikationsmodul aufweist und die Energieversorgungsvorrichtung ein Kommunikationsmodul der Energieversorgungsvorrichtung aufweist. Die Energieversorgungsvorrichtung weist eine Uhr auf, wobei die Uhr dazu eingerichtet ist, einen Zeitstempel zu erzeugen, wobei das Geräte-Kommunikationsmodul und das Kommunikationsmodul der Energieversorgungseinrichtung dazu ausgebildet sind, Daten zwischen der Werkzeugmaschine und der Energieversorgungsvorrichtung auszutauschen, wobei die Energieversorgungsvorrichtung dazu eingerichtet ist, die Daten mit dem Zeitstempel zu verknüpfen, wobei die Energieversorgungsvorrichtung einen Datenspeicher zur Speicherung der mit dem Zeitstempel versehenen Daten umfasst.

Mit der Erfindung kann es beispielsweise ermöglicht werden, konkrete Anfangs- und/oder Endzeitpunkte einer Arbeit, die mit der Werkzeugmaschine durchgeführt werden, zu bestimmen und mit Daten, die von der Werkzeugmaschine und/oder der Energieversorgungsvorrichtung stammen können, zu verknüpfen. Dadurch können Arbeiten, die mit der Werkzeugmaschine durchgeführt werden, besser als zuvor und mit einer höheren Genauigkeit dokumentiert werden. Dies stellt einen wesentlichen Vorteil der Erfindung dar, da ein stetig wachsendes Bedürfnis nach technischer Unterstützung bei höheren Dokumentationsanforderungen besteht. Beispielsweise kann es für ein Bauunternehmen erforderlich sein, gegenüber einem Bauherrn oder verschiedenen Versicherungen gegenüber darzulegen, wann genau mit welchem Gerät auf einer Baustelle gearbeitet wurde. Für solche Dokumentationserfordernisse bietet die Erfindung eine optimale technische Unterstützung und erleichtert für einen Nutzer des Systems die Dokumentation von Arbeiten, die mit der Werkzeugmaschine durchgeführt werden. Außerdem stellt die Möglichkeit, konkrete Anfangs- und/oder Endzeitpunkte von Arbeiten, die mit der Werkzeugmaschine durchgeführt werden, anzugeben, eine erhebliche Verbesserung der bisherigen Dokumentation dar.

Im Kontext der Erfindung kann eine Werkzeugmaschine bereitgestellt werden, die als Energieversorgungsvorrichtung beispielsweise einen Akkumulator («Akku») umfasst. Die Werkzeugmaschine kann aber auch zwei oder mehr Akkus umfassen. Vorzugsweise handelt es sich bei der Energieversorgungsvorrichtung der Werkzeugmaschine um eine wiederaufladbare Batterie, mithin um mindestens einen Akku. Der Akku weist ein Kommunikationsmodul auf, das vorzugsweise dazu eingerichtet ist, mit einem Geräte-Kommunikationsmodul der Werkzeugmaschine zu kommunizieren, d.h. Daten auszutauschen. Bei den Daten, die zwischen den Kommunikationsmodulen des Systems ausgetauscht werden, kann es sich beispielsweise um Betriebsdaten, wie Stromwerte, Spannungswerte, Drehmomente und/oder Drehzahlen handeln, ohne darauf beschränkt zu sein. Die Werkzeugmaschine kann ein Werkzeug aufweisen, das vorzugsweise von einem Motor angetrieben wird. Bei dem Motor kann es sich vorzugsweise um einen Elektromotor handeln. Der Betrieb der Komponenten der Werkzeugmaschine, wie beispielsweise Motor oder Werkzeug, kann durch Parameter, Kennzahlen, Absolut- oder Vergleichswerte beschrieben oder gekennzeichnet werden. Die genannten Größen können Daten im Sinne der Erfindung sein.

Es ist im Sinne der Erfindung bevorzugt, dass diese Daten zwischen der Werkzeugmaschine und der Energieversorgungsvorrichtung ausgetauscht werden. Es ist im Sinne der Erfindung ganz besonders bevorzugt, dass die Daten von der Werkzeugmaschine in Richtung der Energieversorgungsvorrichtung übertragen werden. Mit anderen Worten können die Daten von dem Geräte-Kommunikationsmodul der Werkzeugmaschine an das Kommunikationsmodul der Energieversorgungsvorrichtung übermittelt werden. Das Kommunikationsmodul der Energieversorgungsvorrichtung kann im Sinne der Erfindung bevorzugt auch als zweites oder weiteres Kommunikationsmodul des vorgeschlagenen Systems bezeichnet werden, da es neben dem Geräte-Kommunikationsmodul der Werkzeugmaschine ein zweites oder weiteres Kommunikationsmodul innerhalb des Systems darstellt.

Nach der Übertragung der Daten von der Werkzeugmaschine an die Energieversorgungsvorrichtung können die Daten dort mit einem Zeitstempel versehen werden. Dazu umfasst die Energieversorgungsvorrichtung eine Uhr, wobei die Uhr vorzugsweise Bestandteil einer Elektronik der Energieversorgungsvorrichtung ist. Die Elektronik der Energieversorgungsvorrichtung wird im Sinne der Erfindung bevorzugt auch als zweite oder weitere Elektronik des vorgeschlagenen Systems bezeichnet werden, da sie neben der Geräte-Elektronik der Werkzeugmaschine eine zweite oder weitere Elektronik innerhalb des Systems darstellt. Die zweite oder weitere Elektronik kann eine Uhr umfassen, wobei die Uhr dazu eingerichtet ist, eine Verknüpfung herzustellen zwischen den Daten, die von der Werkzeugmaschine erhalten wurden, und dem Zeitstempel, der mit der Uhr der Energieversorgungsvorrichtung erzeugt werden kann. Somit können die Daten, die beispielsweise einen Betrieb, eine Anwendung oder eine Nutzung der Werkzeugmaschine beschreiben, mit Informationen über den konkreten Anfangs- und/oder Endzeitpunkt des Betriebs, der Anwendung oder der Nutzung der Werkzeugmaschine verknüpft werden, so dass beispielsweise Arbeits-, Pausen- und Ruhezeiten, Wartungsintervalle oder Zeiträume einer besonders intensiven Nutzung des Geräts mit der Erfindung besser dokumentiert werden können.

Die mit dem Zeitstempel verknüpften Daten können in einem Datenspeicher der Energieversorgungsvorrichtung gespeichert werden. Die Daten können als Rohdaten, d.h. im Wesentlichen unverarbeitet, gespeichert werden. Es kann aber im Sinne der Erfindung auch bevorzugt sein, dass die Daten vor ihrer Speicherung informationstechnologisch (weiter-)verarbeitet werden. Auf jeden Fall weisen die Daten einen Zeitstempel auf, wobei der Zeitstempel von der Uhr in der Energieversorgungsvorrichtung erzeugt wird.

Es kann im Sinne der Erfindung auch bevorzugt sein, dass Betriebsdaten der Energieversorgungsvorrichtung mit einem Zeitstempel versehen und/oder verknüpft und in dem Datenspeicher der Energieversorgungsvorrichtung gespeichert werden.

Es ist im Sinne der Erfindung bevorzugt, dass die Uhr der Energieversorgungsvorrichtung eine Echtzeit-Uhr ist. Darüber hinaus kann der Zeitstempel, der von der Uhr der Energieversorgungsvorrichtung erzeugt wird, ein Echtzeit-Zeitstempel sein. Das bedeutet, dass die Energieversorgungsvorrichtung nicht nur in der Lage ist, Zeitspannen und relative Zeitangaben zu ermitteln, sondern konkrete Zeitpunkte, wie Anfangs- und Endzeitpunkte, festzustellen und zu speichern. Darüber hinaus kann der Zeitstempel ein Zeit- und/oder Datumsstempel sein. Das bedeutet, dass der Zeitstempel vorzugsweise nicht nur Zeiten, beispielsweise im Format 00:00 bis 24:00 Uhr, verwenden und ausgeben kann, sondern auch Daten, die Tage, Monate und/oder Jahre beschreiben. Dazu kann beispielsweise das Format TT:MM:JJJJ verwendet werden. Es sind selbstverständlich auch andere Formate für Zeit und Datum denkbar.

In einem Anwendungsbeispielsweise betrifft die Erfindung ein System, das eine Werkzeugmaschine und eine Energieversorgungseinrichtung umfasst, wobei die Energieversorgungsvorrichtung eine Echtzeit-Uhr aufweist, wobei die Echtzeit-Uhr dazu eingerichtet ist, einen Echtzeit-Zeitstempel zu erzeugen, wobei das Geräte-Kommunikationsmodul und das Kommunikationsmodul der Energieversorgungseinrichtung dazu ausgebildet sind, Daten zwischen der Werkzeugmaschine und der Energieversorgungsvorrichtung auszutauschen, wobei die Energieversorgungsvorrichtung dazu eingerichtet ist, die Daten mit dem Echtzeit-Zeitstempel zu verknüpfen, wobei die Energieversorgungsvorrichtung einen Datenspeicher zur Speicherung der mit dem Echtzeit-Zeitstempel versehenen Daten umfasst. Auf diese Weise können Betriebsdaten, die zwischen Werkzeugmaschine und Energieversorgungsvorrichtung ausgetauscht werden, mit einem genau definierten Zeitpunkt verknüpft und in der Energieversorgungsvorrichtung abgespeichert werden. Dazu umfasst die Energieversorgungsvorrichtung einen Datenspeicher, der zur Speicherung solcher Daten mit Zeitstempel bzw. Echtzeit-Zeitstempel ausgebildet ist.

Es ist im Sinne der Erfindung bevorzugt, dass die Energieversorgungsvorrichtung eine Elektronik aufweist, wobei die Elektronik der Energieversorgungsvorrichtung dazu eingerichtet ist, die Daten mit dem Zeitstempel zu verknüpfen. Die Elektronik der Energieversorgungsvorrichtung und die Geräte-Elektronik der Werkzeugmaschine können von Micro Controller-Einheiten gebildet werden oder solche Einheiten (MCU) umfassen. Die Geräte-Elektronik der Werkzeugmaschine kann beispielsweise die verschiedenen Betriebsdaten in der Werkzeugmaschine entgegennehmen und über das Geräte-Kommunikationsmodul an die Energieversorgungsvorrichtung senden. Die Energieversorgungsvorrichtung weist eine Energieversorgungsvorrichtungs-Kommunikationsmodul auf, das die Daten von der Werkzeugmaschine empfängt und an die Elektronik der Energieversorgungsvorrichtung weiterleitet. Dort können die von der Werkzeugmaschine erhaltenen Daten mit dem Zeitstempel der Uhr der Energieversorgungsvorrichtung verknüpft werden.

Es ist im Sinne der Erfindung bevorzugt, dass die Daten zwischen der Werkzeugmaschine und der Energieversorgungsvorrichtung mit Hilfe einer Kommunikationsverbindung ausgetauscht werden. Vorzugsweise kann die Kommunikationsverbindung eine drahtgebundene Verbindung oder eine Funkverbindung sein. Die Kommunikationsverbindung, die zwischen den Kommunikationsmodulen des Systems besteht, kann zum Beispiel auch auf WLAN, bluetooth, Zigbee oder ähnliche Übertragungsmethoden beruhen.

Die Energieversorgungsvorrichtung des vorgeschlagenen kann dazu eingerichtet sein, die in dem Datenspeicher gespeicherten Daten an einen Empfänger zu senden. Dazu kann die Energieversorgungsvorrichtung ein zusätzliches Kommunikationsmodul umfassen. Es kann im Sinne der Erfindung aber auch bevorzugt sein, dass die Energieversorgungsvorrichtung dafür das vorhandene Energieversorgungsvorrichtungs-Kommunikationsmodul verwendet, mit dem auch Daten zwischen der Werkzeugmaschine und dem Energieversorgungsvorrichtung ausgetauscht werden. Es kann im Sinne der Erfindung bevorzugt sein, dass für die Übermittlung der Daten aus dem Datenspeicher der Energieversorgungsvorrichtung an einen Empfänger dasselbe Kommunikationsprotokoll bzw. derselbe Kommunikationsstandard verwendet wird wie für den Datenaustausch zwischen der Werkzeugmaschine und der Energieversorgungsvorrichtung. Es kann allerdings im Sinne der Erfindung ebenfalls bevorzugt sein, dass unterschiedliche Kommunikationsprotokolle, -standards oder verfahren (drahtgebunden oder drahtlos) verwendet werden. Es stellt einen Vorteil der Erfindung dar, dass die Daten zu einem beliebigen Zeitpunkt an den Empfänger übertragen werden können. Beispielsweise kann die Übertragung der Daten von der Energieversorgungsvorrichtung an den Empfänger dann erfolgen, wenn die Energieversorgungsvorrichtung aufgeladen wird und sich beispielsweise in einer Ladestation befindet. Dazu kann beispielsweise eine draht- oder kontaktgebundene Kommunikationsverbindung verwendet werden. Gemäß einem anderen Ausführungsbeispiel können die Daten dann an einen Empfänger übermittelt werden, wenn sich die Energieversorgungsvorrichtung in einem WLAN befindet, so dass die Daten unter Verwendung des WLANs übertragen werden können.

Bei dem Empfänger kann es sich um einen externen Server handeln, um einen stationären Rechner, einen Remote-Rechner oder einen Laptop, der beispielsweise auf einer Baustelle verwendet wird, eine mobile Kommunikationsvorrichtung oder um eine Cloud, ohne darauf beschränkt zu sein.

Es kann im Sinne der Erfindung aber auch bevorzugt sein, dass die Energieversorgungsvorrichtung in räumlicher Nähe zu einem stationären Rechner, einem Laptop oder einer mobilen Kommunikationsvorrichtung aufgestellt und/oder aufgeladen wird, so dass sich eine Nahfeld-Kommunikationsverbindung (near field communication, NFC) zwischen der Energieversorgungsvorrichtung und dem Empfänger ausbilden kann. Darüber hinaus sind alle anderen drahtlosen Kommunikationsverbindungen, wie WLAN, bluetooth, Zigbee, Funk oder dergleichen, vorstellbar. Eine mobile Kommunikationsvorrichtung im Sinne der Erfindung kann beispielsweise ein Tablet-PC, ein Mobiltelefon, ein Smartphone, ein Palm oder dergleichen sein, ohne darauf beschränkt zu sein.

Durch die Übermittlung der Daten von der Energieversorgungsvorrichtung an den Empfänger können die Daten bei diesem Empfänger ausgewertet oder informationstechnologisch weiterverarbeitet werden. Die mit dem Zeitstempel versehenen Daten können insbesondere zu Dokumentationszwecken verwendet werden. Die Daten, die im Datenspeicher der Energieversorgungsvorrichtung abgelegt werden, können beispielsweise auch verwendet werden, um den erfolgreichen Abschluss einer Arbeit mit der Werkzeugmaschine zu dokumentieren, nachzuweisen oder zu verifizieren. Dazu können die Daten beispielsweise archiviert oder graphisch aufbereitet werden. Die Verifikation von erfolgreich abgeschlossenen Arbeiten mit der Werkzeugmaschine stellt eine zusätzliche, erweiterte Funktionalität des vorgeschlagenen Systems dar, deren Bereitstellung von der Fachwelt sehr begrüßt wird.

Es kann im Sinne der Erfindung besonders bevorzugt sein, dass die Daten mit Informationen aus dem Bereich des Buildung Information Modeling (BIM) kombiniert werden, um auf diese Weise die Daten auch mit räumlichen Informationen zu ergänzen. Dadurch kann Nachweispflichten über die Durchführung bestimmter Tätigkeiten besser nachgekommen und eine noch weiter verbesserte Dokumentation von Tätigkeiten ermöglicht werden.

Es ist im Sinne der Erfindung bevorzugt, dass die Uhrzeit beim Auslesen der gespeicherten Daten erforderlichenfalls korrigiert werden kann.

Die Uhr kann über eine eigene Energieversorgungsvorrichtung mit Energie versorg werden; es kann aber auch bevorzugt sein, dass die Uhr von der Energieversorgungsvorrichtung der Werkzeugmaschine mit elektrischer Energie versorgt wird. Vorzugsweise kann eine Kommunikationsverbindung zu einem externen Gerät hergestellt werden, um die Zeit zu korrigieren bzw. anzupassen. Bei dem externen Gerät kann es sich beispielsweise um eine mobile Kommunikationsvorrichtung handeln, wie ein Smartphone, ein Tablet-PC, ein Notebook, ein Palm, ein Handheld oder dergleichen, ohne darauf beschränkt zu sein.

Ausgelesen werden könnten die Daten mit beispielsweise mit einem Kommunikationsmodul, das ein integriertes Mobilfunkmodul aufweist. Dadurch kann eine sehr genaue Uhrzeit zur Verfügung gestellt werden. Das Kommunikationsmodul kann beispielsweise zwischen der Energieversorgungseinrichtung und dem Ladegerät der Energieversorgungseinrichtung angeordnet sein und dazu ausgebildet sein, Daten aus der Energieversorgungseinrichtung auszulesen und über eine Mobilfunkverbindung an einen Empfänger, wie beispielsweise eine Cloud oder dergleichen, zu senden.

Es ist im Sinne der Erfindung bevorzugt, dass dass die Uhr von der Energieversorgungsvorrichtung der Werkzeugmaschine mit elektrischer Energie versorgt wird. Es kann im Sinne der Erfindung aber auch bevorzugt sein, dass die Uhr eine eigene Energieversorgungsvorrichtung, wie eine Knopfzelle, aufweist. Vorzugsweise kann die Energieversorgung der Uhr durch die Zellen erfolgen, die auch für die Versorgung der Werkzeugmaschine vorgesehen sind. Alternativ kann die Uhr auch mit einer eigenen Knopfzelle versorgt werden. Die Uhr stellt im Sinne der Erfindung eine real time clock (RTC) dar. Es ist im Sinne der Erfindung bevorzugt, dass die RTC keine Funkuhr darstellt.

In einem zweiten Aspekt betrifft die Erfindung ein Verfahren zur Verknüpfung von Daten mit einem Zeitstempel und deren Speicherung, wobei das Verfahren durch folgende Verfahrensschritte gekennzeichnet ist:
a) Bereitstellung einer Werkzeugmaschine mit einer Geräte-Elektronik und einem Geräte-Kommunikationsmodul,
b) Bereitstellung einer Energieversorgungsvorrichtung mit einer Elektronik, einem Kommunikationsmodul und einer Uhr,
c) Austausch von Daten zwischen der Werkzeugmaschine und der Energieversorgungsvorrichtung, insbesondere Übermittlung von Daten von der Werkzeugmaschine an die Energieversorgungsvorrichtung,
d) Verknüpfung der ausgetauschten oder der übermittelten Daten mit einem Zeitstempel, der von der Uhr der Energieversorgungsvorrichtung erzeugt wird,
e) Speicherung der mit dem Zeitstempel verknüpften Daten in einem Datenspeicher der Energieversorgungseinrichtung.

Die für das System eingeführten Begriffe, Definitionen und technischen Vorteile gelten vorzugsweise für das Verfahren analog.

Es ist im Sinne der Erfindung bevorzugt, dass die Verknüpfung der Daten mit dem Zeitstempel in einer Elektronik der Energieversorgungsvorrichtung erfolgt. Dieses Vorgehen hat sich als besonders zweckmäßig erwiesen, da der Zeitstempel von der Uhr der Energieversorgungsvorrichtung besonders einfach und unkompliziert an die Elektronik der Energieversorgungsvorrichtung weitergeleitet werden kann und in der Elektronik der Energieversorgungsvorrichtung auch die Daten, die von der Werkzeugmaschine empfangen werden, eintreffen. Die mit dem mindestens einen Zeitstemple verknüpften Daten können dann an den Datenspeicher der Energieversorgungsvorrichtung weitergeleitet und dort hinterlegt werden.

Es ist im Sinne der Erfindung bevorzugt, dass die in dem Datenspeicher der Energieversorgungsvorrichtung gespeicherten Daten an einen Empfänger versendet werden. In diesem Fall kann das vorgeschlagene Verfahren den zusätzlichen Verfahrensschritt der «Übermittlung der mit dem Zeitstempel verknüpften Daten aus dem Datenspeicher der Energieversorgungsvorrichtung an einen Empfänger» umfassen.

Die Uhr der Energieversorgungsvorrichtung ist vorzugsweise eine Echtzeit-Uhr, wobei der Zeitstempel, der mit der Uhr erzeugt wird, vorzugsweise ein Echtzeit-Zeitstempel ist. Es ist im Sinne der Erfindung bevorzugt, dass der mit der Uhr der Elektronik der Energieversorgungsvorrichtung erzeugte Zeitstempel ein Zeit- und/oder Datumsstempel ist.

Vorzugsweise können die in dem Datenspeicher der Energieversorgungsvorrichtung gespeicherten Daten zur Dokumentation von Arbeiten, die mit der Werkzeugmaschine durchgeführt werden, verwendet werden. Alternativ oder darüber hinaus können die in dem Datenspeicher der Energieversorgungsvorrichtung gespeicherten Daten zu Verifikation von erfolgreich mit der Werkzeugmaschine durchgeführten Arbeiten verwendet werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigen:

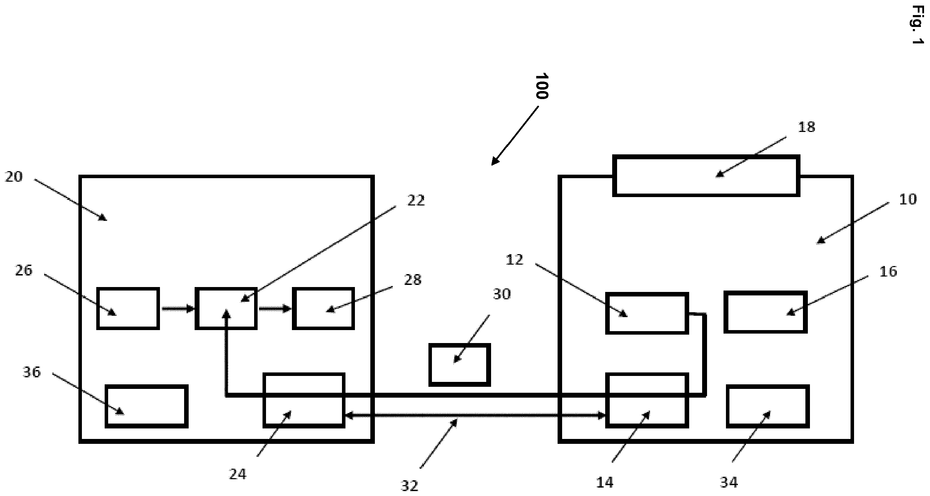

- Fig. 1: Ansicht einer bevorzugten Ausgestaltung Systems, das eine Werkzeugmaschine und eine Energieversorgungsvorrichtung umfasst

### Ausführungsbeispiele und Figurenbeschreibung:

Figur 1 zeigt eine Ansicht einer bevorzugten Ausgestaltung Systems 100, das eine Werkzeugmaschine 10 und eine Energieversorgungsvorrichtung 20 umfasst. Die Energieversorgungsvorrichtung 20 kann beispielsweise von einer wiederaufladbaren Batterie oder einem Akkumulator («Akku») gebildet werden. Die Energieversorgungsvorrichtung 20 kann lösbar mit der Werkzeugmaschine 10 verbunden werden, wobei die Energieversorgungsvorrichtung 20 die Werkzeugmaschine 10 vorzugsweise dann mit elektrischer Energie versorgt, wenn die Energieversorgungsvorrichtung 20 mit der Werkzeugmaschine 10 verbunden vorliegt. Die Energieversorgungsvorrichtung 20 weist eine Elektronik 22 auf, wobei die Elektronik 22 der Energieversorgungsvorrichtung 20 eine Uhr 26 umfassen kann. Die Uhr 26 kann beispielsweise in der Elektronik 22 der Energieversorgungsvorrichtung 20 integriert vorliegen. Die Uhr 26 ist dazu eingerichtet, Zeitstempel zu erzeugen, wobei die Zeitstempel beispielsweise Informationen über Anfangs- und Endzeitpunkte von Arbeiten, die mit der Werkzeugmaschine 10 durchgeführt werden, umfassen können. Darüber hinaus kann der Zeitstempel Datumsangaben oder Datumsinformationen umfassen, also Angaben zu Arbeitstagen oder kalendarische Informationen. Es ist im Sinne der Erfindung bevorzugt, dass Daten 30, die die Energieversorgungsvorrichtung 20 von der Werkzeugmaschine 10 erhält, in der Elektronik 22 der Energieversorgungsvorrichtung 20 mit mindestens einem Zeitstempel versehen bzw. verknüpft werden. Mit anderen Worten ist die Elektronik 22 der Energieversorgungsvorrichtung 20 dazu eingerichtet, diese Verknüpfung der von der Werkzeugmaschine 10 erhaltenen Daten 30 mit dem Zeitstempel, der von der Uhr 26 der Energieversorgungsvorrichtung 20 erzeugt wird, herzustellen.

Die Energieversorgungsvorrichtung 20 umfasst ferner ein Kommunikationsmodul 24, wobei das Kommunikationsmodul 24 der Energieversorgungsvorrichtung 20 vorzugsweise dazu eingerichtet ist, mit einem Kommunikationsmodul 14 der Werkzeugmaschine 10 zusammen zu wirken. Vorzugsweise bilden die beiden Kommunikationsmodule 14, 24 eine Kommunikationsverbindung 32, wobei die Kommunikationsverbindung 32 vorzugsweise drahtgebunden sein kann. Alternativ kann es sich auch um eine Funkverbindung oder eine andere drahtlose Verbindung handeln, wie WLAN, bluethooth, Zigbee oder dergleichen. Die Werkzeugmaschine 10 und die Energieversorgungsvorrichtung 20 können mit Hilfe ihrer Kommunikationsmodule 14, 24 Daten 30 austauschen, wobei es im Sinne der Erfindung ganz besonders bevorzugt ist, dass Daten 30 von der Werkzeugmaschine 10 an die Energieversorgungsvorrichtung 20 gesendet bzw. übermittelt werden. Bei den Daten 30 kann es sich beispielsweise um Betriebsdaten der Werkzeugmaschine 10 oder ihrer Komponenten 16, 18 handeln. Beispielsweise umfasst die Werkzeugmaschine 10 einen Motor 16 und ein Werkzeug 18, wobei der Motor 16 dazu eingerichtet ist, das Werkzeug 18 der Werkzeugmaschine 10 anzutreiben. Die Komponenten 16, 18 der Werkzeugmaschine 10 sind in Fig. 1 schematisch dargestellt. Darüber hinaus umfassen die Werkzeugmaschine 10 und die Energieversorgungsvorrichtung 20 Schalter 34, 36, mit denen die Werkzeugmaschine 10 und die Energieversorgungsvorrichtung 20 bedient werden können. Beispielsweise kann es sich bei dem Schalter 34 der Werkzeugmaschine 10 um einen Ein- und Ausschalter handeln, mit dem die Werkzeugmaschine 10 ein- oder ausgeschaltet werden kann. Auch der Schalter 36 der Energieversorgungsvorrichtung 20 kann von einem Nutzer betätigt werden, um Eingaben an der Energieversorgungsvorrichtung 20 vorzunehmen.

Ein möglicher Weg der Datenübertragung ist in Fig. 1 mit dem mehrteiligen Pfeil hervorgehoben, der von der Elektronik 12 der Werkzeugmaschine 10 über das Kommunikationsmodul 14 der Werkzeugmaschine 10 und das Kommunikationsmodul 24 der Energieversorgungsvorrichtung 20 in Richtung der Elektronik 22 der Energieversorgungsvorrichtung 20 verläuft und dort endet. Es ist im Sinne der Erfindung bevorzugt, dass Daten 30 unter Zuhilfenahme des Kommunikationsmoduls 14 der Werkzeugmaschine 10 und des Kommunikationsmoduls 24 der Energieversorgungsvorrichtung 20 an die Elektronik 22 der Energieversorgungsvorrichtung 20 gesendet bzw. übertragen werden. Dabei wird insbesondere die Kommunikationsverbindung 32 verwendet, die zwischen den Kommunikationsmodulen 14, 24 der Werkzeugmaschine 10 und der Energieversorgungsvorrichtung 20 besteht.

Die von der Werkzeugmaschine 10 erhaltenen Daten 30 kommen in der Elektronik 22 der Energieversorgungsvorrichtung 20 an und können dort mit einem Zeitstempel versehen werden. Dabei kann es sich insbesondere um einen Echtzeit-Zeitstempel handeln. Der Zeitstempel wird von der Uhr 26 der Energieversorgungsvorrichtung 20 erzeugt. Die Uhr 26 kann beispielsweise Bestandteil der Elektronik 22 der Energieversorgungsvorrichtung 20 sein. Die mit dem mindestens einen Zeitstempel versehenen Daten 30 können dann an einen Datenspeicher 28 der Energieversorgungsvorrichtung 20 weitergeleitet werden, wo die Daten 30 gespeichert, d.h. aufbewahrt, werden können. In einer bevorzugten Ausgestaltung der Erfindung können die Daten 30 aus dem Datenspeicher 28 der Energieversorgungsvorrichtung 20 an einen Empfänger weiter versendet werden. Bei dem Empfänger kann es sich beispielsweise um einen Remote-Computer, einen Laptop, eine Cloud oder um eine mobile Kommunikationsvorrichtung handeln, ohne darauf beschränkt zu sein. Es ist im Sinne der Erfindung bevorzugt, dass die Daten 30 beim Empfänger informationstechnologisch weiterverarbeitet und beispielsweise zu Dokumentationszwecken verwendet werden können. Darüber hinaus können die Daten 30 beim Empfänger dazu verwendet werden, Arbeiten, die erfolgreich mit der Werkzeugmaschine 10 abgeschlossen wurden, zu verifizieren und zu dokumentieren. Dadurch kann die Dokumentation von Arbeitsfortschritten oder die Dokumentation der sach- und fachgerechten Durchführung von Arbeiten mit einer Werkzeugmaschine 10 wesentlich verbessert und erheblich erleichtert werden.

### Bezugszeichenliste

- 10: Werkzeugmaschine
- 12: Geräte-Elektronik
- 14: Geräte-Kommunikationsmodul
- 16: Motor der Werkzeugmaschine
- 18: Werkzeug der Werkzeugmaschine
- 20: Energieversorgungseinrichtung
- 22: Elektronik der Energieversorgungseinrichtung
- 24: Kommunikationsmodul der Energieversorgungseinrichtung
- 26: Uhr
- 28: Datenspeicher
- 30: Daten
- 32: Kommunikationsverbindung
- 34: Schalter der Werkzeugmaschine
- 36: Schalter der Energieversorgungseinrichtung

## Patentansprüche

1. System (100) umfassend eine Werkzeugmaschine (10) und eine Energieversorgungseinrichtung (20), wobei die Werkzeugmaschine (10) eine Geräte-Elektronik (12) und ein Geräte-Kommunikationsmodul (14) aufweist und die Energieversorgungsvorrichtung (20) ein Kommunikationsmodul (24) der Energieversorgungsvorrichtung (20) aufweist,
**dadurch gekennzeichnet, dass**
die Energieversorgungsvorrichtung (20) eine Uhr (26) aufweist, wobei die Uhr (26) dazu eingerichtet ist, einen Zeitstempel zu erzeugen, wobei das Geräte-Kommunikationsmodul (14) und das Kommunikationsmodul (24) der Energieversorgungseinrichtung (20) dazu ausgebildet sind, Daten (30) zwischen der Werkzeugmaschine (10) und der Energieversorgungsvorrichtung (20) auszutauschen, wobei die Energieversorgungsvorrichtung (20) dazu eingerichtet ist, die Daten (30) mit dem Zeitstempel zu verknüpfen, wobei die Energieversorgungsvorrichtung (20) einen Datenspeicher (28) zur Speicherung der mit dem Zeitstempel versehenen Daten (30) umfasst.

2. System (100) nach Anspruch 1
**dadurch gekennzeichnet, dass**
die Uhr (26) der Energieversorgungseinrichtung (20) eine Echtzeit-Uhr ist.

3. System (100) nach Anspruch 1 oder 2
**dadurch gekennzeichnet, dass**
der Zeitstempel ein Echtzeit-Zeitstempel ist.

4. System (100) nach einem der vorhergehenden Ansprüche
**dadurch gekennzeichnet, dass**
der Zeitstempel ein Zeit- und/oder Datumsstempel ist.

5. System (100) nach einem der vorhergehenden Ansprüche
**dadurch gekennzeichnet, dass**
die Energieversorgungseinrichtung (20) eine wiederaufladbare Batterie, insbesondere ein Akkumulator, ist.

6. System (100) nach einem der vorhergehenden Ansprüche
**dadurch gekennzeichnet, dass**
die Energieversorgungsvorrichtung (20) eine Elektronik (22) umfasst, wobei die Uhr (26) Bestandteil der Elektronik (22) der Energieversorgungseinrichtung (20) ist.

7. System (100) nach Anspruch 6
**dadurch gekennzeichnet, dass**
die Elektronik (22) der Energieversorgungseinrichtung (20) dazu eingerichtet ist, die Daten (30) mit dem Zeitstempel zu verknüpfen.

8. System (100) nach einem der vorhergehenden Ansprüche
**dadurch gekennzeichnet, dass**
die Daten (30) zwischen der Werkzeugmaschine (10) und der Energieversorgungsvorrichtung (20) mit Hilfe einer Kommunikationsverbindung (32) ausgetauscht werden.

9. System (100) nach Anspruch 8
**dadurch gekennzeichnet, dass**
die Kommunikationsverbindung (32) eine drahtgebundene Verbindung oder eine Funkverbindung ist.

10. System (100) nach einem der vorhergehenden Ansprüche
**dadurch gekennzeichnet, dass**
die Energieversorgungsvorrichtung (20) dazu eingerichtet ist, die in dem Datenspeicher (28) gespeicherten Daten an einen Empfänger zu senden.

11. System (100) nach einem der vorhergehenden Ansprüche
**dadurch gekennzeichnet,**
**dass** die Uhr (26) von der Energieversorgungsvorrichtung (20) der Werkzeugmaschine (10) mit elektrischer Energie versorgt wird und/oder dass die Uhr (26) eine eigene Energieversorgungsvorrichtung aufweist.

12. Verfahren zur Verknüpfung von Daten (30) mit einem Zeitstempel und deren Speicherung, wobei das Verfahren durch **folgende Verfahrensschritte gekennzeichnet** ist:
a) Bereitstellung einer Werkzeugmaschine (10) mit einer Geräte-Elektronik (12) und einem Geräte-Kommunikationsmodul (14),
b) Bereitstellung einer Energieversorgungsvorrichtung (20) mit einer Elektronik (22), einem Kommunikationsmodul (24) und einer Uhr (26),
c) Austausch von Daten (30) zwischen der Werkzeugmaschine (10) und der Energieversorgungsvorrichtung (20), insbesondere Übermittlung von Daten (30) von der Werkzeugmaschine (10) an die Energieversorgungsvorrichtung (20),
d) Verknüpfung der ausgetauschten oder der übermittelten Daten (30) mit einem Zeitstempel, der von der Uhr (26) der Energieversorgungsvorrichtung (20) erzeugt wird,
e) Speicherung der mit dem Zeitstempel verknüpften Daten (30) in einem Datenspeicher (28) der Energieversorgungseinrichtung (20).

13. Verfahren nach Anspruch 12
**dadurch gekennzeichnet, dass**
die Verknüpfung der Daten (30) mit dem Zeitstempel in einer Elektronik (22) der Energieversorgungsvorrichtung (20) erfolgt.

14. Verfahren nach Anspruch 12 oder 13
**dadurch gekennzeichnet, dass**
die in dem Datenspeicher (28) der Energieversorgungsvorrichtung (20) gespeicherten Daten (30) an einen Empfänger versendet werden.

15. Verfahren nach einem der Ansprüche 12 bis 14
**dadurch gekennzeichnet, dass**
die in dem Datenspeicher (28) der Energieversorgungsvorrichtung (20) gespeicherten Daten (30) zur Dokumentation von Arbeiten, die mit der Werkzeugmaschine (10) durchgeführt werden, verwendet werden und/oder wobei die in dem Datenspeicher (28) der Energieversorgungsvorrichtung (20) gespeicherten Daten (30) zu Verifikation von erfolgreich mit der Werkzeugmaschine (30) durchgeführten Arbeiten verwendet werden.
